# EUROPEAN PATENT APPLICATION

(11) **EP 3 800 684 A1**
(43) Date of publication of application: **07.04.2021**
(21) Application number: 19201279.7
(22) Date of filing: 03.10.2019
(51) Int. Cl.: H01M 2/02, H01M 2/20, H01M 2/10, H01M 10/42

(54) **BATTERY MODULE**

(71) Applicant: Siemens Aktiengesellschaft, 80333 München (DE)
(72) Inventor: Hasznosi, Kolos, 2440 Szazhalombatta (HU); Legar, Andras, 1154 Budapest (HU); Lorincz, Daniel, 1046 Budapest (HU); Lukacs, Andras, 1119 Budapest (HU); Orokos-Toth, Istvan, 3300 Eger (HU); Veres-Szekely, Vidor, 7257 Mosdós (HU); Balazs, Gergely György, 1034 Budapest (HU); Debreceni, Tibor, 1125 Budapest6 (HU)
(74) Representative: Maier, Daniel Oliver

(57) **Abstract**

Battery module (1), comprising a multiplicity of battery cells, and a planar circuit carrier (100) with a first side (101) and a second side (102), and carrier openings (111-113) for receiving the positive contact (11) of the respective cell (10, 20, 30), and first pad areas (121-123) on the first side (101), and second pad areas (131-133) on the second side (102), and first wiring means (151-153), and connecting means (161-163), wherein a cell (10, 20, 30) is arranged with its positive contact (11) at the respective carrier opening (111-113), and the positive contact (11) of the respective cell (10, 20, 30) is accessed using the respective carrier opening (111-113) and connected with the respective first pad area (121-123) by the respective first wiring means (151-153), and the negative cup contact point (18) of the respective cell is connected with the respective second pad area (131-133) by the respective connecting means (161-163).

## Description

The invention relates to a battery module.

Today's battery systems with a high number of cells are often big and heavy. At mobility applications like electric cars it is not so important to achieve a weight and size optimized battery module design, since motion energy can be recovered by recuperation systems, which charge the battery back.

However, battery systems, in particular for aircraft propulsion systems, being lightweight is a major aspect of mechanical design. Energy recuperation at airborne electrical propulsion systems is not yet applicable.

Moreover, it is always beneficial for the design of battery modules whether the assembly of battery modules is easy and cost effective.

It is the objective of the invention to save weight of a reliable battery module and further, to provide a simple assembly of components of a reliable battery module.

The problem of the invention is solved by a battery module, comprising a multiplicity of battery cells, each cell having a positive contact point and a negative cup contact point, and a planar circuit carrier with
a first side and a second side being opposite to each other regarding the plane of the circuit carrier, and carrier openings for receiving the positive contact of the respective cell of the multiplicity of battery cells, and
first pad areas on the first side, and
second pad areas on the second side,
and first wiring means, which comprise a flexible, electrically conductive wire,
and connecting means, which provide a soldered, welded or glued mechanical connection,
wherein a cell of the multiplicity of battery cells is arranged with its positive contact at the respective carrier opening of the circuit carrier,
and the positive contact of the respective cell is accessed using the respective carrier opening and connected with the respective first pad area by the respective first wiring means,
and the negative cup contact point of the respective cell is connected with the respective second pad area by the respective connecting means.

Thus, a simple assembly of cells is achieved by using a circuit carrier, which enables a reliable and durable mechanical and electrical connection of parts.

Since the cells can be connected by only one side of a cell, the battery module gets simple and lightweight and mechanical stress during the operation for instance at an aircraft can be reduced. Moreover, in an emergency case, before a thermal runaway in a cell occurs, the cell can thermally expand, since it is only fixed of one side of the cell.

The invention can be further developed if the respective opening of the circuit carrier has a shape, which exceeds at least partially the boundary shape of the positive contact of a cell received in the respective opening in a pad plane of the respective second pad area to allow at least partially access to the negative cup contact point of the respective assembled cell using the respective opening.

This allows the access to the negative cup contact point for a simple electrical connection.

The invention can be further developed if the circuit carrier further comprises interconnection pad areas on the first side,
and second wiring means, which comprise a flexible, electrically conductive wire,
and the negative cup contact point of the respective cell is connected to the respective interconnection pad area by the respective second wiring means.

Thus, a serial circuit of cells can be achieved in a simple way to build a battery module from a multiplicity of battery cells.

The invention can be further developed if the interconnection pad area for a first cell equals the first pad area for a second cell.

Thus, a serial circuit of cells can be achieved in a simple way to build a battery module from a multiplicity of battery cells.

The invention can be further developed if the connecting means is electrically conductive, and the second pad area of a first cell is connected to the first pad area of a second cell by a via through the circuit carrier.

Thus, a serial circuit of cells can be achieved in a simple way to build a battery module from a multiplicity of battery cells, incorporating a simple connection of the negative cup contact point.

The invention can be further developed if the respective negative electrode of the cells is connected to the circuit carrier only via negative cup contact point of the cell.

Thus, a serial circuit of cells can be achieved in a simple way to build a battery module from a multiplicity of battery cells.

The invention can be further developed if the first pad area in included within a conductive busbar structure on the first side of the circuit carrier.

Thus, a serial circuit of cells can be achieved in a simple way to build a battery module from a multiplicity of battery cells.

The invention can be further developed if the cells have a respective housing elongated along a cell axis and two ends, where the positive contact and a negative contact are located respectively,
and the battery module further comprises a spacer structure with respective spacer openings, in which the respective cell is received.

Thus, the spacer structure supports the mechanical stability of the cell within the battery module, enhanced the reliability of the battery module and simplifies the assembly of the battery module.

The invention can be further developed if comprising at least one distance part, which is mounted between the circuit carrier and the spacer structure.

Thus, a thermal expansion caused before a thermal runaway of a cell is supported and the effect of the thermal runaway is reduced by the expansion of the cell.

The invention can be further developed if the respective cell is received in the respective spacer opening of the spacer structure in a tight fit manner.

Thus, the spacer structure supports the mechanical stability of the cell within the battery module, enhanced the reliability of the battery module and simplifies the assembly of the battery module.

The invention can be further developed if the at least one distance part is laterally flexible.

Thus, the thermal expansion of the cell is further improved, since the spacer structure is flexible mounted regarding the thermal expansion, but also fixed when no thermal expansion is absorbed.

The invention can be further developed if either the positive contact point as well as the negative cup contact point lie in a cutting plane through the cell, which is oriented orthogonal to the cell axis.

The problem of the invention is also solved by a usage of a battery module within an aircraft, preferably at an aircraft with an electric propulsion system, which is supplied by the battery module according to the invention, i.e. to drive the electric propulsion of the aircraft.

The invention will be explained in more detail with reference to an embodiment shown in the accompanying drawings. In the drawings show:
- Fig. 1: a perspective view of a state-of-the-art battery cell,
- Fig. 2: a side view of the battery cell of Fig. 1,
- Fig. 3: a cross section view of a first embodiment of a battery module according to the invention,
- Fig. 4: a cross section view of a second embodiment of a battery module according to the invention,
- Fig. 5: a top view of the battery module of Fig. 4.

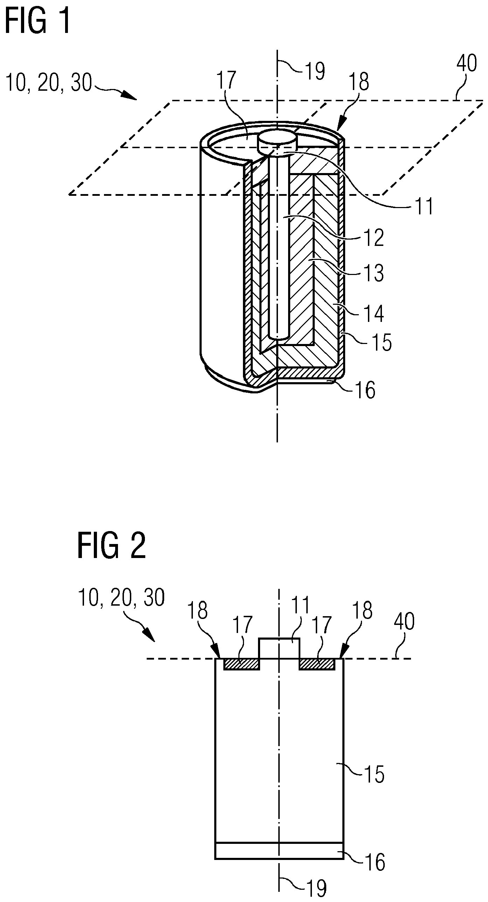

**Fig. 1** shows a perspective view of a state-of-the-art battery cell 10, 20, 30, similar to the standard battery type "AA" or "AAA".

The battery cell 10, 20, 30 comprises a metal cap as a positive contact 11, which is connected to a carbon slab as a positive electrode 12.

The positive electrode 12 is surrounded by a Mangan oxide layer 13, which in turn is surrounded by an electrolyte layer 14.

The electrolyte layer 14 is embedded into a zinc cup as a negative electrode 15.

The bottom of the zinc cup 15 provides a metal ground as a negative contact 16.

The cell 10, 20, 30 has a respective housing, primarily formed by the zinc cup 15, elongated along a cell axis 19 with two ends, where the positive contact 11 and the negative contact 16 are located respectively.

The zinc cup 15 provides further a negative cup contact point 18 on that end, where the positive contact 11 is located.

The negative cup contact point 18 and the positive contact 11 are arranged coaxial regarding the cell axis 19 and electrically as well as geometrically separated by an insulation cap 17.

Either the positive contact point 11 as well as the negative cup contact point 18 lie in a cutting plane 40 through the cell 10, 20, 30, which is oriented orthogonal to the cell axis 19.

The battery cell 10, 20, 30 provides a surface of the negative cup contact point 18, which enables a mechanical and/or electrical contact, i.e. is not covered with an insulation medium or a passivation of the surface.

**Fig. 2** shows a side view of the battery cell 10, 20, 30, illustrating that the positive contact point 11 and the negative cup contact point 18 lie in the cutting plane 40.

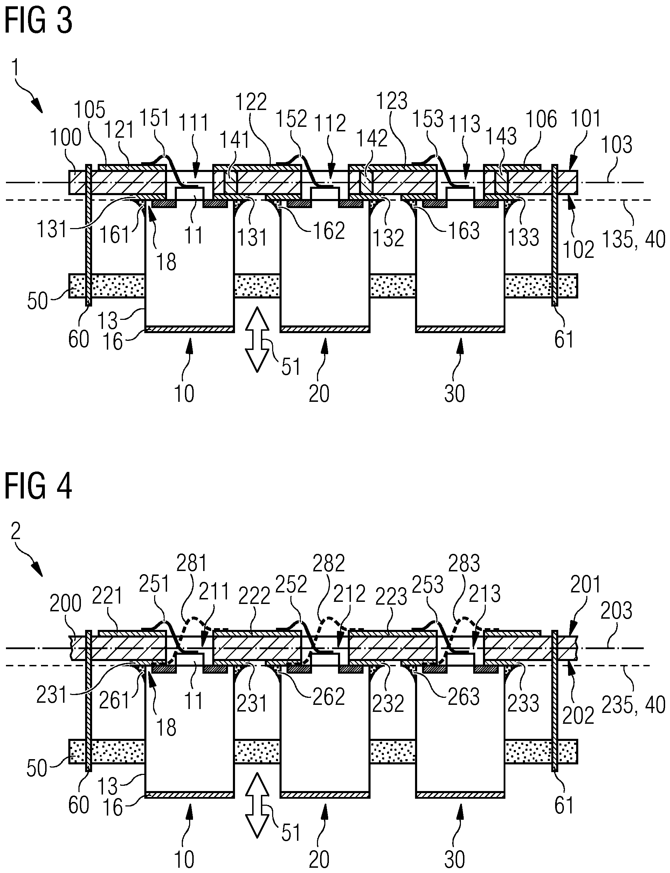

**Fig. 3** shows a battery module 1, comprising a multiplicity of cells 10, 20, 30.

The battery module 1 comprises:
a multiplicity of battery cells, each cell having a positive contact point 11 and a negative cup contact point 18,
and a planar circuit carrier 100 with
   a first side 101 and a second side 102 being opposite to each other regarding the plane 103 of the circuit carrier 100, and
   carrier openings 111-113for receiving the positive contact 11 of the respective cell 10, 20, 30 of the multiplicity of battery cells, and
   first pad areas 121-123 on the first side 101, and
   second pad areas 131-133 on the second side 102,
and first wiring means 151-153, which comprise a flexible, electrically conductive wire,
and connecting means 161-163, which provide a soldered, welded or glued mechanical connection,
wherein a cell 10, 20, 30 of the multiplicity of battery cells is arranged with its positive contact 11 at the respective carrier opening 111-113 of the circuit carrier 100,
and the positive contact 11 of the respective cell 10 is accessed using the respective carrier opening 111-113 and connected with the respective first pad area 121-123 by the respective first wiring means 151-153,
and the negative cup contact point 18 of the respective cell is connected with the respective second pad area 131-133 by the respective connecting means 161-163.

The connecting means 161-163 is electrically conductive, and the second pad area 131, 132 of a first cell 10, 20 is connected to the first pad area 121, 122 of a second cell 20, 30 by a via 141, 142 through the circuit carrier 100 and thus, forming an electric serial circuit of battery cells.

The respective negative electrode 15 of the cells 10, 20, 30 is connected to the circuit carrier 100 only via negative cup contact point 18 of the cell 10, 20, 30.

The battery module 1 further comprises a spacer structure 50 with respective spacer openings, in which the respective cell 10, 20, 30 is received.

The battery module 1 further comprises distance parts 60 and 61, which are mounted between the circuit carrier 100 and the spacer structure 50.

Since the cells 10, 20, 30 are fixed on only one end of the cell, where the positive contact 11 and the negative cup contact point 18 are located, the cell can thermally expand as depicted by direction 51 in case just before a thermal runaway of the cell.

The respective cell 10, 20, 30 can be received in the respective spacer opening of the spacer structure 50 in a tight fit manner, and the distance parts 60, 61 can be laterally flexible to support thermal expansion in the direction 51.

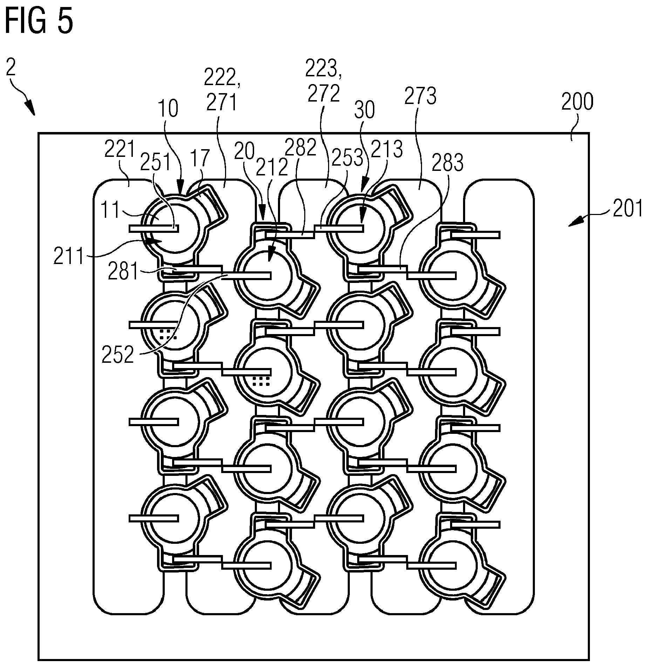

**Fig. 4** and **Fig. 5** show a battery module 2, comprising a multiplicity of cells 10, 20, 30.

The battery module 2 comprises:
a multiplicity of battery cells, each cell having a positive contact point 11 and a negative cup contact point 18, and a planar circuit carrier 200 with
   a first side 201 and a second side 202 being opposite to each other regarding the plane 203 of the circuit carrier 200, and
   carrier openings 211-213 for receiving the positive contact 11 of the respective cell 10, 20, 30 of the multiplicity of battery cells, and
   first pad areas 221-223 on the first side 201, and
   second pad areas 231-233 on the second side 202,
and first wiring means 251-253, which comprise a flexible, electrically conductive wire,
and connecting means 261-263, which provide a soldered, welded or glued mechanical connection,
wherein a cell 10, 20, 30 of the multiplicity of battery cells is arranged with its positive contact 11 at the respective carrier opening 211-213 of the circuit carrier 200,
and the positive contact 11 of the respective cell 10, 20, 30 is accessed using the respective carrier opening 211-213 and connected with the respective first pad area 211-213 by the respective first wiring means 251-253,
and the negative cup contact point 18 of the respective cell is connected with the respective second pad area 231-233 by the respective connecting means 161-163.

The respective opening 211-213 of the circuit carrier 200 has a shape, which exceeds partially the boundary shape of the positive contact 11 of a cell 10, 20, 30 received in the respective opening 211-213 in a pad plane of the respective second pad area to allow at least partially access to the negative cup contact point 18 of the respective assembled cell 10, 20, 30 using the respective opening 211-213.

The circuit carrier 200 further comprises interconnection pad areas 271-273 on the first side 201,
and second wiring means 281-283, which comprise a flexible, electrically conductive wire,
and the negative cup contact point 18 of the respective cell 10, 20, 30 is connected to the respective interconnection pad area 271-273 by the respective second wiring means 281-283.

The interconnection pad area 271, 272 for a first cell 10, 20 equals the first pad area 222, 223 for a second cell (20, 30) and thus, forming an electric serial circuit of battery cells.

The first pad area 221-223 in included within a conductive busbar structure on the first side 201 of the circuit carrier 200.

The battery module 2 further comprises a spacer structure 50 with respective spacer openings, in which the respective cell 10, 20, 30 is received.

The battery module 2 further comprises distance parts 60 and 61, which are mounted between the circuit carrier 200 and the spacer structure 50.

Since the cells 10, 20, 30 are fixed on only one end of the cell, where the positive contact 11 and the negative cup contact point 18 are located, the cell can thermally expand as depicted by direction 51 in case just before a thermal runaway of the cell.

The respective cell 10, 20, 30 can be received in the respective spacer opening of the spacer structure 50 in a tight fit manner, and the distance parts 60, 61 can be laterally flexible to support thermal expansion in the direction 51.

### List of reference numerals:

- 10, 20, 30: battery cell
- 11: Metal cap, positive contact
- 12: Carbon slab, positive electrode
- 13: Mangan oxide layer
- 14: electrolyte layer
- 15: Zinc cup, negative electrode
- 16: metal ground, negative contact
- 17: insulation cap
- 18: negative cup contact point
- 19: cell axis
- 40: cutting plane
- 50: cell spacer structure
- 51: thermal cell expansion direction
- 60, 61: Mounting means, distance part
- 100, 200: planar circuit carrier
- 101, 201: first side of the circuit carrier
- 102, 202: second side of the circuit carrier
- 103, 203: plane of the planar circuit carrier
- 105: input pad, first pad
- 106: output pad
- 111-113, 211-213: carrier opening
- 121-123, 221-223: first pad area
- 131-133, 231-233: second pad area, cell pad area
- 135, 235: pad plane of second pad area
- 141-143: via
- 151-153, 251-253, 281-283: bond wire
- 161-163: conductive adhesive
- 271-273: interconnection pad area

## Claims

1. Battery module (1, 2), comprising
a multiplicity of battery cells, each cell having a positive contact point (11) and a negative cup contact point (18),
and a planar circuit carrier (100, 200) with
a first side (101, 201) and a second side (102, 202) being opposite to each other regarding the plane (103, 203) of the circuit carrier (100, 200), and
carrier openings (111-113, 211-213) for receiving the positive contact (11) of the respective cell (10, 20, 30) of the multiplicity of battery cells, and
first pad areas (121-123, 221-223) on the first side (101, 201), and
second pad areas (131-133, 231-233) on the second side (102, 202),
and first wiring means (151-153, 251-253), which comprise a flexible, electrically conductive wire,
and connecting means (161-163, 261-263), which provide a soldered, welded or glued mechanical connection,
wherein a cell (10, 20, 30) of the multiplicity of battery cells is arranged with its positive contact (11) at the respective carrier opening (111-113, 211-213) of the circuit carrier (100, 200),
and the positive contact (11) of the respective cell (10, 20, 30) is accessed using the respective carrier opening (111-113, 211-213) and connected with the respective first pad area (121-123, 211-213) by the respective first wiring means (151-153, 251-253),
and the negative cup contact point (18) of the respective cell is connected with the respective second pad area (131-133, 231-233) by the respective connecting means (161-163).

2. Battery module (2) according to claim 1, wherein the respective opening (211-213) of the circuit carrier (200) has a shape, which exceeds at least partially the boundary shape of the positive contact (11) of a cell (10, 20, 30) received in the respective opening (211-213) in a pad plane of the respective second pad area to allow at least partially access to the negative cup contact point (18) of the respective assembled cell (10, 20, 30) using the respective opening (211-213) .

3. Battery module (2) according to the preceding claim,
wherein the circuit carrier (200) further comprises interconnection pad areas (271-273) on the first side (201),
and second wiring means (281-283), which comprise a flexible, electrically conductive wire,
and the negative cup contact point (18) of the respective cell (10, 20, 30) is connected to the respective interconnection pad area (271-273) by the respective second wiring means (281-283).

4. Battery module (2) according to the preceding claim,
wherein the interconnection pad area (271, 272) for a first cell (10, 20) equals the first pad area (222, 223) for a second cell (20, 30).

5. Battery module (1) according to claim 1, wherein the connecting means (161-163) is electrically conductive, and the second pad area (131, 132) of a first cell (10, 20) is connected to the first pad area (121, 122) of a second cell (20, 30) by a via (141, 142) through the circuit carrier (100).

6. Battery module (1) according to the preceding claim,
wherein the respective negative electrode (15) of the cells (10, 20, 30) is connected to the circuit carrier (100) only via negative cup contact point (18) of the cell (10, 20, 30) .

7. Battery module (1, 2) according to any of the preceding claims, wherein the first pad area (121-123, 221-223) in included within a conductive busbar structure on the first side (101, 201) of the circuit carrier (100, 200).

8. Battery module (1, 2) according to any of the preceding claims, wherein the cells (10, 20, 30) have a respective housing elongated along an cell axis (19) and two ends, where the positive contact (11) and a negative contact (16) are located respectively,
and the battery module (1, 2) further comprises a spacer structure (50) with respective spacer openings, in which the respective cell (10, 20, 30) is received.

9. Battery module (1) according to the preceding claim, further comprising at least one distance part (60, 61), which is mounted between the circuit carrier (100, 200) and the spacer structure (50).

10. Battery module (1) according to the preceding claim, wherein the respective cell (10, 20, 30) is received in the respective spacer opening of the spacer structure (50) in a tight fit manner.

11. Battery module (1) according to the preceding claim, wherein the at least one distance part (60, 61) is laterally flexible.

12. Battery module (1, 2) according to any of the preceding claims, wherein either the positive contact point (11) as well as the negative cup contact point (18) lie in a cutting plane (40) through the cell (10, 20, 30), which is oriented orthogonal to the cell axis (19).

13. Usage of a battery module (1, 2) within an aircraft, preferably at an aircraft with an electric propulsion system, which is supplied by the battery module (1, 2) according to any of the preceding claims.
